## Europäisches Patentamt

## European Patent Office

## Office européen des brevets

(11) Numéro de publication: **0 250 004**
**B1**

(12)

# FASCICULE DE BREVET EUROPEEN

(45) Date de publication du fascicule du brevet: **23.01.91**

(51) Int. Cl.⁵: **A 01 F 15/00**

(21) Numéro de dépôt: **87110586.2**

(22) Date de dépôt: **27.01.84**

(60) Numéro de publication de la demande initiale en application de l'article 76 CBE: **0 150 630**

(54) **Presse à balles cylindriques.**

(43) Date de publication de la demande:
**23.12.87 Bulletin 87/52**

(45) Mention de la délivrance du brevet:
**23.01.91 Bulletin 91/04**

(84) Etats contractants désignés:
**DE FR GB IT NL**

(56) Documents cités:
**FR-A-2 546 368**
**GB-A-2 010 654**
**US-A-4 155 298**
**US-A-4 176 596**

(73) Titulaire: **JOHN DEERE (Société Anonyme)**
**20, Rue André Dessaux**
**F-45401 Fleury-les-Aubrais (FR)**

(72) Inventeur: **Anstey, Henry Dennis**
**Ottumwa**
**Iowa 52501 (US)**
Inventeur: **Viaud, Jean**
**16 rue de l'Ecole**
**F-57200 Sarreguemines (FR)**

(74) Mandataire: **Pruvost, Marc Henri et al**
**Cabinet ORES 6, Avenue de Messine**
**F-75008 Paris (FR)**

Courier Press, Leamington Spa, England.

EP 0 250 004 B1

## Description

La présente invention concerne les presses à balles cylindriques ou rondes comprenant des jeux de bandes ou courroies ménageant une chambre de formation d'un balle par enroulement, ainsi qu'un ramasseur destiné à reprendre les produits de récolte sur le sol pour leur transfert à la chambre de formation de la balle à travers un intervalle ou orifice d'entrée des produits, un rouleau d'amorçage à section droite non circulaire étant disposé de l'autre côté de cet orifice par rapport au ramasseur auquel est adjacent un organe.

De telles presses connues par exemple par GB—A—2 010 654 forment, par enroulement à l'intérieur de leur chambre ménagée dans le corps de la presse, une balle de forme générale cylindrique à partir de produits de récolte, notamment de fourrage ou de foin, ramassés sur le champ au cours de la progression de la presse. Quand la balle a atteint le diamètre désiré et a été liée, la porte arriére de la presse est ouverte et la balle est déchargée sur le sol. La formation d'une autre balle par enroulement peut être déclenchée ensuite à l'intérieur de la presse.

Les produits destinés à former la balle sont ramassés sur le sol au moyen d'un ramasseur. Ils sont transférés par celui-ci dans la chambre de la presse, entre les brins des bandes ou courroies, qui occupent au début de l'opération des positions voisines. Du fait de ce rapprochement et des sens de déplacement opposés de ces brins des bandes ou courroies, les produits ramassés au début de la formation d'une balle ont tendance à s'enrouler et à former le noyau d'une nouvelle balle, dont le diamètre va aller en augmentant, les brins de bandes ou courroies s'écartant l'un de l'autre en fonction de cette augmentation de diamètre de la balle. Ces bandes ou courroies sont alors maintenues sous tension par des rouleaux de tension qui sont eux-mêmes soumis à l'action de ressorts ou de cylindres hydrauliques.

Pour favoriser ce début de formation de la balle, il est prévu de manière connue, vers la partie avant de l'intervalle ou orifice de pénétration des produits dans la chambre de la presse, un rouleau dénommé rouleau d'amorçage, voisin d'un rouleau fixe de la presse sur lequel passent les bandes ou courroies et qui sert généralement de rouleau d'entraînement, voir EP—A—076 502.

Dans le cas de certains produits de récolte, notamment de produits destinés à former du fourrage, par exemple de ray-grass, et en particulier dans des conditions humides, des difficultés apparaissent du fait que ces produits ont tendance à s'enrouler autour du rouleau d'amorçage classique, ce qui s'oppose à la formation d'un noyau de balle correct et est, en outre, à l'origine de bourrages qui peuvent exiger l'arrêt de la presse et qui, en conséquence, ralentissent le rythme du travail.

Il est également connu que, dans des machines agricoles à éléments rotatifs, des foins de paille s'enroulent autour de ces éléments, par exemple le rouleau de compression supérieur de l'entrée d'un presse à balles cylindriques et l'on a déjà proposé dans US—A—4 155 298 de s'affranchir de cet inconvénient en utilisant une racle coopérant avec ce rouleau.

Lorsque ce dernier, toutefois, est le rouleau d'amorçage (et non pas de compression) d'une presse selon EP—A—076 502, une racle usuelle disposée comme dans US—A—4 155 298, ne permet pas d'assurer avec certitude la formation satisfaisante d'un noyau de balle et cela, vraisemblablement, parce que la racle du brevet US fait tomber les produits déposés sur le rouleau dans la chambre de formation de balle.

Le but de l'invention est de remédier à cet inconvénient des presses existantes à rouleau d'amorçage et on prévoit, pour ce faire que l'organe adjacent au rouleau d'amorçage soit une racle placée au-dessous dudit rouleau et montée sur le châssis de la presse de façon pivotante au voisinage du rouleau d'amorçage vers lequel elle est sollicitée de façon élastique.

Cette racle est avantageusement un levier à deux bras dont un bras s'étend au voisinage du rouleau d'amorçage tandis que l'autre bras, orienté à l'opposé de ce rouleau par rapport au point de montage à pivotement, est relié à un dispositif d'entraînement qui soumet la racle à un mouvement de pivotement en synchronisme avec la rotation du rouleaux d'amorçage.

Les moyens assurant ce pivotement de la racle peuvent être constitués par exemple par un système de manivelle, de came ou d'excentrique.

La racle s'étend de façon continue sur toute la largeur de la presse ou bien est constituée par des éléments séparés ou par des dents rapprochées les unes des autres.

La description qui va suivre, faite au regard des dessins annexés donnés à titre non limitatif permettra de mieux comprendre l'invention.

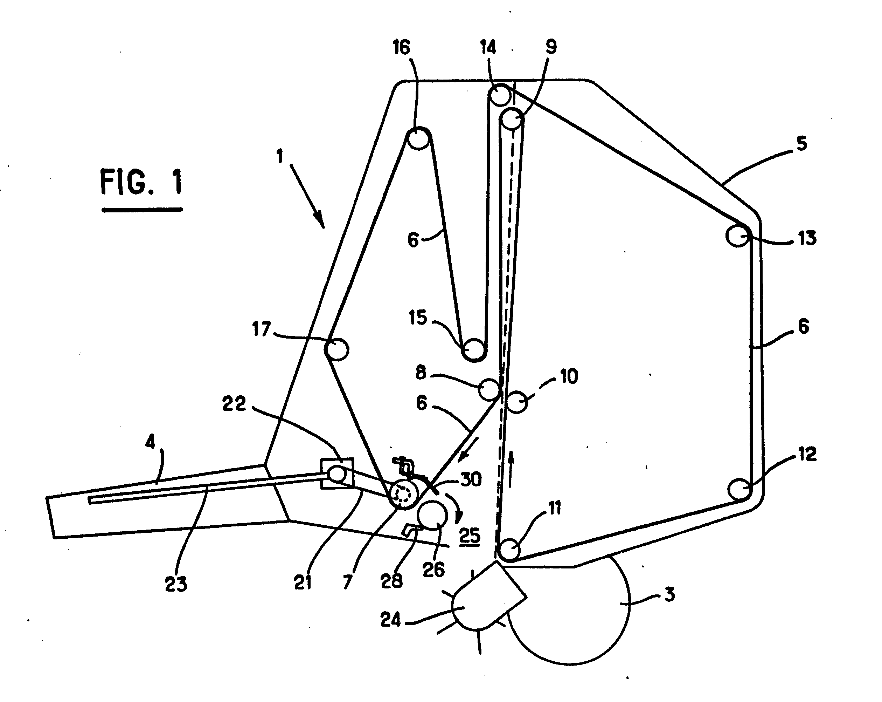

La figure 1 est une représentation schématique de profil d'une presse à balles cylindriques avec rouleau d'amorçage, comportant une racle et des doigts associés à ce rouleau, selon la Demande principale EP—A—0150 630.

La figure 2 est une vue partielle à plus grande échelle montrant un mode de réalisation possible de l'invention.

Sur les dessins on a désigné par la référence 1 une presse à balles cylindriques de type général classique, comportant un châssis avant fixe indiqué schématiquement en 2 et supporté par des roues 3, ce châssis portant lui-même un timon 4 destiné à son attelage à un tracteur par exemple. Sur la partie avant fixe 2 formant châssis est articulée de la manière habituelle une porte arrière indiquée de façon générale en 5, qui peut pivoter sur la partie avant autour d'un axe transversal horizontal supérieur (non représenté), l'ouveture et la fermeture de cette prote étant comandées de façon en soi classique par des vérins hydrauliques ou des moyens équivalents (également non représentés).

Un jeu de courroies 6 est prévu sur la presse. Ce jeu comprend, de la façon usuelle, un certain nombre de courroies parallèles réparties sur la largeur de la presse et passant sur des rouleaux de renvoi 7—17. Certains de ces rouleaux de renvoi sont montés sur la partie avant fixe 2 du châssis, tandis que d'autres sont supportés par la porte arrière 5. Dans le cas du mode de réalisation représenté, les bandes ou courroies 6 délimitent complètement le chambre d'enroulement, et il est prévu en conséquence un seul jeu de courroies. Il va de soi toutefois que l'invention est également applicable dans le cas d'une presse à balles cylindriques comportant un jeu de courroies sur la partie avant de la presse et un second jeu de courroies sur sa partie arrière ou porte. Certains des rouleaux de renvoi sont supportés de façon classique à l'extrémité de bras qui sont eux-mêmes montés de façon pivotante et qui sont soumis de la manière habituelle à l'action de ressorts ou de cylindres hydrauliques, afin d'assurer le maintien en tension des courroies de la presse.

Le rouleau de renvoi 7 est un rouleau d'entraînement des bandes ou courroies. Il est lui-même entraîné par une transmission par courroies ou chaînes 21 à partir d'une boîte de renvoi 22 attaquée elle-même par l'arbre de transmission 23 relié à l'arbre de prise de force du tracteur. On pourrait également prévoir une transmission entre le rouleau 7 et un autre rouleau de renvoi, par exemple le rouleau supérieur, pour répartir sur deux rouleaux l'entraînement des bandes ou courroies.

On a indiqué en 24, à la partie inférieure de la presse le ramasseur qui est monté au voisinage du rouleau inférieur arrière 11 et qui sert à ramasser sur le sol les produits de récolte qui y reposent généralement en andains, en vue de leur introduction dans la chambre de la presse à travers un intervalle ou orifice d'entrée des produits indiqué en 25. De l'autre côté de cet intervalle 25 par rapport au ramasseur 24, il est prévu d'une manière en soi connue un rouleau d'amorçage 26.

Au début de l'opération de formation d'un balle à l'intérieur de la presse, les brins de courroies qui délimitent la chambre d'enroulement de la presse sont très rapprochés l'un de l'autre. Les produits ramassés par le ramasseur 24 pénètrent entre ces brins de courroies par l'intervalle 25. Ils ont tendance à d'enrouler sur eux-mêmes et cet enroulement est favorisé par la présence du rouleau d'amorçage 26, qui est entraîné de façon positive par des moyens non représentés à partir du rouleau d'entraînement 7.

Toutefois, comme indiqué précédemment, pour certains produits de récolte, notamment pour les fourrages tels que le ray-grass très humide, des difficultés peuvent apparaître du fait de la tendance à l'enroulement de ces produits de récolte autour du rouleau d'amorçage. Il en résulte éventuellement des bourrages qui exigent un arrêt de la presse.

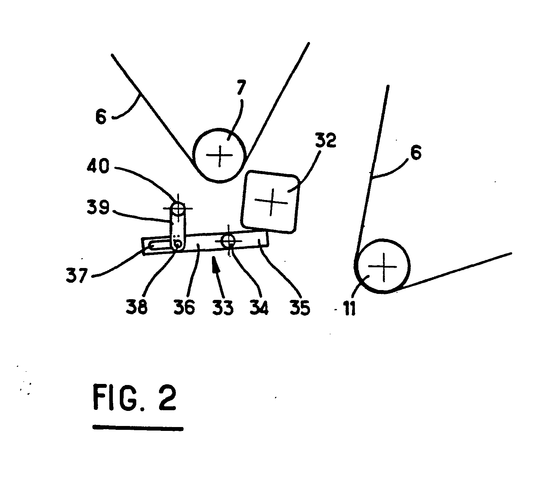

On se reportera maintenant à la figure 2, qui montre un mode de réalisation de l'invention.

Sur cette figure 2, qui est une vue en représentation partielle, on a indiqué en 7 le rouleau de renvoi des bandes ou courroies 6, et en 32 le rouleau d'amorçage, ici à section droite carrée. Cette section pourrait d'ailleurs être différente, par exemple hexagonale, ou avoir tout autre profil désiré.

A ce rouleau d'amorçage est associée un racle 33.

Etant donné que la section du rouleau d'amorçage s'écarte dans le cas présent d'une section circulaire et compte tenu du fait que l'efficacité de la racle est liée à son positionnement au voisinage immédiat de la périphérie de ce rouleau d'amorçage, cette racle est, dans le cas présent, constituée par un levier à deux bras 33 qui est monté à pivotement sur la partie avant 2 du châssis de la presse en 34. Comme indiqué, l'extrémité avant 35 de la racle se trouve au voisinage immédiat de la périphérie du rouleau d'amorcage 32 et la partie arrière 36 de la racle présente une fente 37 qui est attaquée par un doigt 38 monté sur un bras de manivelle 39 tournant autour d'un axe 40. Son entraînement est un entraînement positif. Il est assuré par des moyens non représentés, le mouvement étant prélevé au rouleau de renvoi ou d'entraînement 7 par exemple.

Ainsi, si on assure un entraînement de l'arbre ou axe 40 à une vitesse qui représente dans le cas d'un rouleau d'amorçage 32 polygonal un multiple de la vitesse de rotation de ce rouleau d'amorçage 32, correspondant au nombre de ses faces, on obtient un mouvement de pivotement de la racle 33 dont l'extrémité 35 suit parfaitement la périphérie du rouleau d'amorçage 32 et demeure à son voisinage immédiat.

L'enroulement préjudiciable de produits de récolte même humides autour du rouleau d'amorçage 32 est évité par la présence de cette racle.

La racle prévue suivant l'invention peut s'étendre de façon continue sur toute la largeur de la presse ou bien elle peut être constituée par des éléments séparés ou par des dents rapprochées les unes des autres. Dans le cas d'une racle continue, il est prévu de préférence une manivelle de commande sur chaque côté de la presse.

On voit que l'invention remédie ainsi aux inconvénients mentionnés et permet d'obtenir un amorçage correct dans la formation d'une balle à l'intérieur de la chambre de la presse, quelles que soient les conditions des produits de récolte ramassés.

## Revendications

1. Presse à balles cylindriques ou rondes comprenant de jeux de bandes ou courroies (6) ménageant une chambre de formation d'une balle par enroulement, ainsi qu'un ramasseur (24) destiné à reprendre les produits de récolte sur le sol pour leur transfert à la chambre de formation de la balle à travers un intervalle ou orifice (25) d'entrée des produits, un rouleau d'amorçage (32) à section droite non-circulaire disposé de l'autre côté de cet orifice (25) par rapport au ramasseur (24) et un organe adjacent audit rouleau, caractérisé en ce que ledit organe est un racle (33) placée au-dessous du rouleau et montée sur le châssis de la presse de façon pivotante au voisinage de ce rouleau d'amorçage (32) vers lequel elle est sollicitée de façon élastique.

2. Presse à balles cylindriques suivant la revendication 1, caractérisée en ce que la racle (33) est constituée par un levier à deux bras dont un bras (35) s'étend au voisinage du rouleau d'amorçage (32), tandis que l'autre bras (36), orienté à l'opposé de ce rouleau par rapport au point de montage à pivotement (34), est relié à un dispositif d'entraînement (39) qui soument la racle à un mouvement de pivotement, en synchronisme avec la rotation du rouleau d'amorçage (32).

3. Presse à balles cylindriques suivant la revendication 2, caractérisée en ce que le second bras (36) de la racle (33) présente une fente (37) qui est attaquée par un doigt (38) porté par une manivelle (39), une came ou un excentrique.

4. Presse à balles cylindriques suivant l'une quelconque des revendications précédentes, caractérisée en ce que la racle (33) s'étend de façon continue sur toute la largeur de la presse, ou bien est constituée par des éléments séparés ou par des dents rapprochées les unes des autres.

**Patentansprüche**

1. Presse für zylindrische oder runde Ballen, welche einen Satz Bänder oder Riemen (6) aufweist, die eine Kammer zum Bilden eines Ballen durch einen Rollvorgang schaffen, und mit einem Aufsammler (24), der dazu bestimmt ist, die Ernteprodukte auf dem Boden für ihre Überführung in die Ballenbildungskammer quer durch einen Intervall oder eine Eintrittsöffnung (25) für die Produkte aufzunehmen, mit einer Auslöserolle (32) von unrundem Querschnitt, die in Bezug auf den Aufsammler (24) auf der anderen Seite dieser Öffnung (25) angeordnet ist, und mit einem Organ in der Nähe der genannten Rolle, dadurch gekennzeichnet, daß das genannte Organ ein Schaber (33) ist, der unterhalb der Rolle angeordnet und auf dem Chassis der Prese in der Mahe der Auslöserolle (32) schwenkbar montiert ist, in deren Richtung der Schaber elastisch vorgespannt ist.

2. Presse für zylindrische Ballen nach Anspruch 1, dadurch gekennzeichnet, daß der Schaber (33) durch einen zweiarmigen Hebel gebildet ist, dessen einer Arm (35) sich in die Nähe der Auslöserolle (32) erstreckt, während der andere Arm (36) in Bezug auf den Schwenkmontagepunkt (34) von der Rolle weg orientiert mit einer Mitnehmereinrichtung (39) verbunden ist, welche den Schaber einer Schwenkbewegung synchron mit der Rotation der Auslöserolle (32) unterwirft.

3. Presse für zylindrische Ballen nach Anspruch 2, dadurch gekennzeichnet, daß der zweite Arm (36) des Schabers (33) eine Öffnung (37) darbietet, in die ein Finger (38) eingreift, der an einer Kurbel (39), einem Kocken oder einem Exzenter unterstützt ist.

4. Presse für zylindrische Ballen nach irgendeinem der voranstehenden Ansprüche, dadurch gekennzeichnet, daß der Schaber (38) in kontinuierlicher Weise über die ganze Breite der Presse erstreckt oder durch getrennte Elemente oder durch Zähne gebildet ist, die sich einander annähern.

**Claims**

1. A baling press for cylindrical or round bales, comprising runs of bands or belts (6) defining a chamber for forming a bale by rolling, together with a collector (24) adapted to pick up the harvested products from the ground for transferring them to the bale forming chamber through a gap or orifice (25) for entry of the products, a feed roll (32) with a straight transverse cross section arranged on the other side of the said orifice (25) from the collector (24), and a member adjacent to the said roll, characterised in that the member is a scraper (33) placed below the said roll and pivotally mounted on the chassis of the press in the vicinity of the said feed roll, towards which it is biassed resiliently.

2. A baling press for cylindrical bales according to Claim 1, characterised in that the scraper (33) comprises a lever having two arms, with one said arm (35) extending to the vicinity of the feed roll (32) while the other arm (36), which is orientated away from the said roll with respect to the pivotal mounting point (34), is connected to a driving device (39) which subjects the scraper to a pivoting movement in synchronism with the rotation of the feed roll (32).

3. A baling press for cylindrical bales according to Claim 2, characterised in that the second arm (36) of the scraper (33) has an aperture (37), which is engaged by a finger (38) carried by a crank (39) or by a cam or eccentric.

4. A baler for cylindrical bales according to any one of the preceding claims, characterised in that the scraper (33) extends continuously over the whole width of the press, or comprises a plurality of separate elements or teeth contiguous with each other.

FIG. 1

EP 0 250 004 B1

FIG. 2